# EUROPÄISCHE PATENTSCHRIFT

(11) **EP 0 477 177 B1**
(45) Veröffentlichungstag und Bekanntmachung des Hinweises auf die Patenterteilung: **31.08.1994**
(21) Anmeldenummer: 90904604.7
(22) Anmeldetag: 26.03.1990
(51) Int. Cl.: G02B 6/28, G02B 6/42

(54) **KOPPELELEMENT FÜR LICHTWELLENLEITER**
A COUPLING COMPONENT FOR A LIGHT-WAVEGUIDE
ELEMENT DE COUPLAGE POUR GUIDE D'ONDES LUMINEUSES

(30) Priorität: 03.05.1989 DE 3914590
(43) Veröffentlichungstag der Anmeldung: 01.04.1992
(73) Patentinhaber: ROBERT BOSCH GMBH, 70442 Stuttgart (DE)
(72) Erfinder: KNOLL, Peter, D-7505 Ettlingen 1 (DE); KÖNIG, Winfried, D-7507 Pfinztal-Berghausen (DE); GÜNTHER, Clemens, D-7831 Sexau (DE)
(86) Internationale Anmeldenummer: DE9000243
(87) Internationale Veröffentlichungsnummer: WO9013835

(56) Entgegenhaltungen:
- GB-A- 2 140 576
- US-A- 4 173 390
- US-A- 4 346 961

## Beschreibung

### Stand der Technik

Die Erfindung geht aus von einem Koppelelement für einen Lichtwellenleiter nach der Gattung des Hauptanspruchs. Ein solches Koppelelement ist in der Patentschrift GB-A-2 140 576 beschrieben. Aus der DE-C-26 14 051 ist ein Koppler für einen Lichtwellenleiter bekannt, bei dem am Umfang des Lichtwellenleiters teilweise eine Kerbe oder Nut angebracht ist. Die Seitenflanken der Nut weisen glatte Flächen auf, die verspiegelt sind. Auf der der Nut gegenüberliegenden Seite des Lichtwellenleiters ist eine Sende- bzw. Empfangseinrichtung angebracht. Die im Lichtwellenleiter befindliche Strahlung wird nun teilweise an den verspiegelten Flächen der Nut auf den Empfänger geleitet. Entsprechend wird die vom Sender generierte Strahlung über die verspiegelte Fläche in den Lichtwellenleiter eingekoppelt. Diese Anordnung eines Koppelelementes erfordert eine große Präzision bei der Herstellung des Koppelelementes. Auch ist der Aufwand erheblich, da die Flanken der Nut sehr glatt,eben sowie verspiegelt sein müssen. Auch erfordert die Änkoppelung des Empfangs- bzw. Senderelementes eine hohe Präzision, da sonst in der Grenzschicht zwischen dem Lichtwellenleiter und dem angeschlossenen Element ein Teil der ausgekoppelten optischen Strahlung verloren geht. Da die Fasern des Lichtwellenleiters relativ dünn sind, ist die mechanische Belastbarkeit des angekoppelten Empfangs- bzw. Sendeelementes sehr gering. Bei Erschütterungen kann es daher leicht zu einem Bruch und damit zu einem Ausfall des Koppelelementes kommen.

### Vorteile der Erfindung

Das erfindungsgemäße Koppelelement mit den kennzeichnenden Merkmalen des Hauptanspruchs hat demgegenüber den Vorteil, daß das lichtempfindliche Empfangs- bzw. Sendelement nicht auf der der Nut gegenüberliegenden Seite angeordnet ist, sondern im Bereich der Nut. Dadurch ist die Herstellung des Koppelelementes sehr einfach, da die Nut ohne Spezialwerkzeug herstellbar ist und eine Verspiegelung ihrer Flächen entfällt. Besonders vorteilhaft ist auch, daß das Empfangs- bzw. Sendeelement elektrische Anschlüsse aufweist, über die die optische Strahlung als elektrisches Signal abgreifbar bzw. ein Signal in den Lichtwellenleiter einkoppelbar ist. Dadurch wird die Handhabung des Koppelelementes sehr einfach und zuverlässig.

Durch die in den Unteransprüchen aufgeführten Maßnahmen sind vorteilhafte Weiterbildungen und Verbesserungen des im Hauptanspruch angegebenen Koppelelementes möglich.

Besonders vorteilhaft ist, daß die eingebrachte Nut die Form eines Zylindersegmentes oder einer Keilform aufweist. Derartige Nuten sind ohne Spezialwerkzeug, beispielsweise mit einem Messer herstellbar. Eine besondere Präzision bei der Herstellung insbesondere die Berücksichtigung eines bestimmten Winkels ist nicht erforderlich.

Weiterhin ist vorteilhaft, daß der Koppelfaktor des Koppelelementes durch Verändern der Tiefe der Nut einstellbar ist. Bei großer Nuttiefe kann das Empfangs- bzw. Sendeelement tiefer in den Lichtwellenleiter eintauchen, so daß dann die aktive wirksame Fläche dieser Elemente vergrößert wird. Werden die Elemente weniger tief in den Lichtwellenleiter eingesetzt, dann wird der Koppelfaktor entsprechend geringer. Auf diese Weise läßt sich mit einfachen Mitteln der Koppelfaktor einstellen.

Durch Änderung des Neigungswinkels des Empfangs- bzw. Sendelementes zur Ausbreitungrichtung der optischen Strahlung läßt sich vorteilhaft der Wirkungsgrad des Koppelelementes optimieren. So wird der größte Wirkungsgrad erreicht, wenn die Flächennormale der Elemente in etwa parallel zur Ausbreitungsrichtung der optischen Strahlung im Lichtwellenleiter liegt.

Ein weiterer Vorteil ist, daß das Koppelelement mit einer transparenten Vergußmasse vergossen ist, die in etwa den gleichen optischen Brechungsindex aufweist wie der Lichtwellenleiter. Dadurch werden störende Reflektionen an den Schnittflächen der Nut vermieden.

Auch ist vorteilhaft, wenn das Empfangselement eine Photodiode bzw. das Sendeelement IR-Strahler ist. Diese Elemente sind handelsüblich und preiswert zu erhalten.

Besonders vorteilhaft ist auch, daß das Empfangs- bzw. Sendeelement über elektrische Leitungen mit Anschlußstiften verbunden ist, die in einer Trägerplatte angeordnet sind. Dadurch kann auf einfache Weise das äquivalente elektrische Signal aus- bzw. eingekoppelt werden.

Zur Ableitung der entstehenden Verlustwärme ist es vorteilhaft, die Elemente auf ihren passiven Seiten mit einem Wärmeleitkleber auf dem Träger zu befestigen. Dadurch kann auf einfache Weise die störende Verlustwärme abgeleitet werden, ohne daß infolge von Temperaturerhöhungen übermäßige mechanische Spannungen oder Verschiebungen der Elemente auftreten.

Weitere Vorteile des erfindungsgemäßen Koppelelementes sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 eine Anordnung des Empfangs- und Sendeelementes, Figur 2 ein elektrisches Schaltbild, Figur 3 einen Lichtwellenleiter, und Figur 4 eine Anordnung eines Koppelelementes an einen Lichtwellenleiter.

### Beschreibung des Ausführungsbeispiels

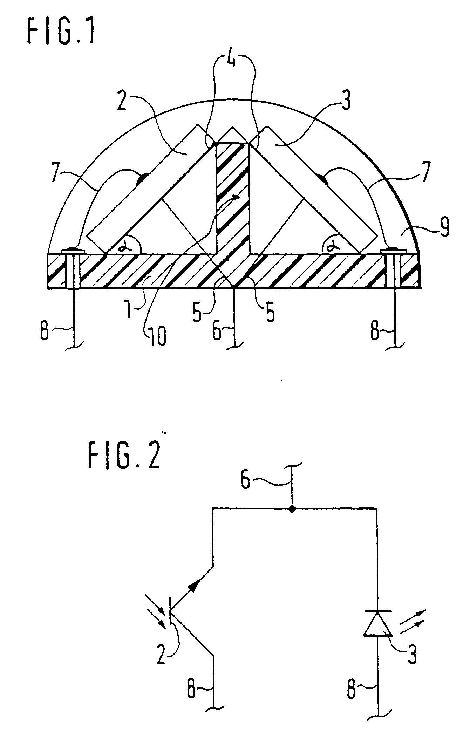

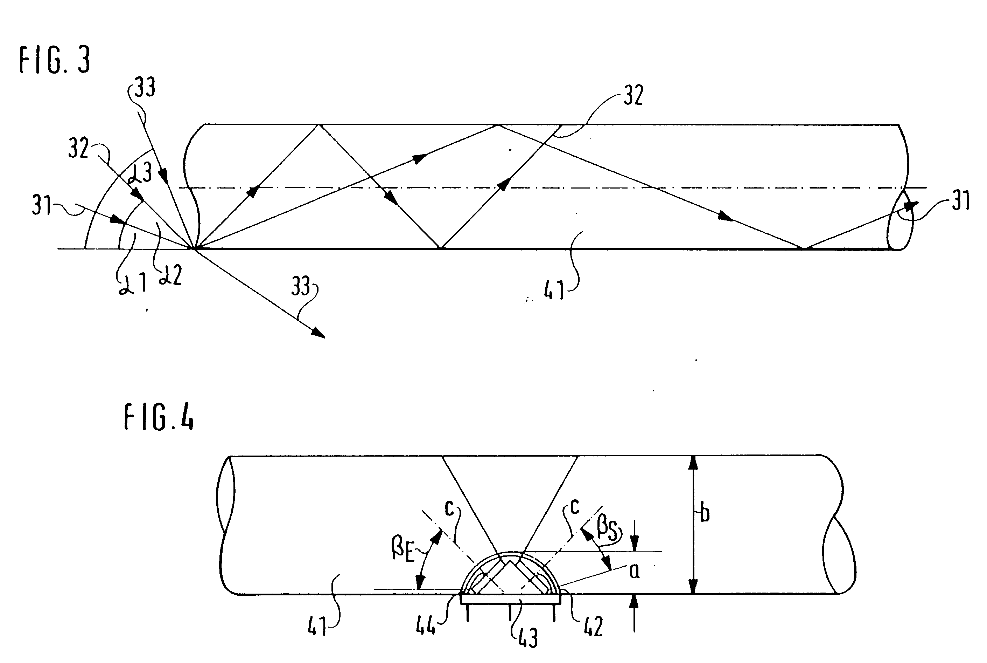

Gemäß Figur 1 weist das Koppelelement 10 einen Träger 1 auf, auf dessen Grundfläche mittig eine Stütze angeordnet ist. Der Träger 1 ist aus Kunststoff oder Keramik oder einem anderen geeigneten Material gefertigt. Ein als Fotodiode oder Fototransistor ausgebildetes Empfangselement 2 bzw. ein als Luminiszenzdiode ausgebildetes Sendeelement 3 ist an die Mittelstütze derart angelegt, daß es mit der Grundfläche des Trägers 1 einen Winkel α bildet. Es hat sich gezeigt, daß die Dämpfung in dem Lichtleiter gering ist, wenn der Winkel α etwa 45° - 60° beträgt. Dabei ist zu berücksichtigen, daß bei einem großen Winkel α das Koppelelement tief in den Lichtwellenleiter eintauchen würde. Das Empfangs- und Sendeelement 2, 3 ist mit einem leitfähigen Kleber am Träger 1 befestigt. Leitfähige Kleber sind in der Halbleitertechnik bekannt und dienen insbesondere zur Verbesserung der Wärmeableitung an die Umgebung. Die Elemente 2, 3 sind über elektrische Leitungen mit Anschlußstiften 6, 8 verbunden, über die ein elektrisches Signal abgegriffen bzw. zugeführt werden kann. Dabei sind die auf der Rückseite des Elementes 2, 3 angeschlossenen Leiter zu einer Masseleitung am Anschlußstift 6 angeschlossen, so daß jeweils ein Element zwischen einem Anschlußstift 8 und einem Anschlußstift 6 ansteuerbar ist. Das Koppelelement 10 wird nun in eine als Kerbe vorbereitete Nut des Lichtwellenleiters 41 eingesetzt, die am Umfang des Lichtwellenleiters quer zu dessen Längsrichtung angeordnet ist. Die Nut muß nicht paßgenau sein, da die Zwischenräume zwischen den Elementen 2, 3 und dem Lichtwellenleiter 41 mit einer transparenten Vergußmasse 9 ausgegossen werden. Es ist zweckmäßig, den Brechungsindex der Vergußmasse 9 mit dem des Lichtwellenleiters 41 abzustimmen, damit keine unnötigen Reflektionen auftreten können und damit die Verluste gering sind. Das Koppelelement kann je nach Wunsch mehr oder weniger tief in die Nut des Lichtwellenleiters eingetaucht werden. Weiterhin ist es in gewissen Grenzen kippbar, so daß es leicht an die Wellenausbreitung im Lichtwellenleiter 41 anpaßbar ist. Das Koppelelement ist an beliebiger Stelle einbaubar. Besondere Anforderungen an den Lichtwellenleiter sind nicht gestellt. In Figur 2 ist ein elektrisches Schaltbild des Koppelelementes 41 dargestellt. Zwischen den Anschlußstiften 8 und 6 ist als Empfangselement ein Fototransistor 2 und als Sendeelement eine Luminizenzdiode 3 dargestellt. Der Emitter des Fototransistors 2 bzw. die Kathode der Luminiszenzdiode 3 sind zusammengeführt und mit dem Anschlußstift 6 verbunden.

Im folgenden wird die Wirkungsweise dieses Koppelelementes beschrieben.

Wie aus Figur 3 ersichtlich ist, sind in einem Lichtwellenleiter prinzipiell nur solche Strahlen ausbreitungsfähig, deren Einfallswinkel kleiner als der Grenzwinkel für Totalreflektion ist. Für Kunststofflichtleiter mit hoher Brechzahl n beträgt dieser Winkel etwa 33° und 45°. Bei den Strahlen 1 und 2 sind die Einfallswinkel α1 und α2 so klein, daß die Strahlen in der Faser bleiben und ausgebreitet werden. Der Strahl 3 wird hingegen aus der Faser austreten, da sein Winkel α3 größer ist als der kritische Winkel.Da Koppelelemente mit großem Wirkungsgrad angestrebt werden, muß die Oberflächennormale c des Empfangs- bzw. des Sendeelementes möglichst gut mit der Ausbreitungsrichtung übereinstimmen. Entsprechend der Figur 4 sind daher die Elemente 2, 3 so in den Lichtwellenleiter 41 eingelegt, daß deren Flächennormale in etwa parallel zur Ausbreitungsrichtung der Strahlung liegt, d. h. der Winkel β_{E} bzw. der Winkel β_{S} entsprechend dem Winkel α. Um nun einerseits ein zu starkes Eintauchen in den Lichtwellenleiter 41 zu vermeiden und andererseits die Dämpfung gering zu halten, wurde vorteilhaft der Winkel α auf 45° festgelegt. Ein Teil der sich im Lichtwellenleiter 41 ausbreitenden Strahlung fällt nun auf das Empfangselement 2, das entsprechend der Moden ein elektrisches Signal an seine Ausgangsklemmen 8, 6 zur Verfügung stellt. Dieses elektrische Signal kann mit einer nicht dargestellten elektrischen Meßeinrichtung gemessen werden. Diese Meßeinrichtung ist dem Fachmann bekannt und daher nicht Gegenstand der Erfindung. Durch diese Anordnung des Empfangselementes 2 können nur Strahlen ausgekoppelt werden, deren Ausbreitungsrichtung in Richtung des Koppelelementes ist. Aus der Gegenrichtung können keine Strahlen aufgenommen werden, da sie praktisch nicht auf die aktive Fläche des Empfangselementes 2 auftreffen. Auf diese Weise wird eine einfache Richtwirkung der Strahlung erreicht.

In entsprechender Weise kann bei dem Sendeelement 3 ein elektrisches Signal eingespeist werden, das als optische Strahlung im Lichtwellenleiter 41 ausgebreitet wird. Auch in diesem Fall ist die Ausbreitungsrichtung durch die Positionierung des Sendeelementes 3 festgelegt. Als Sendeelement kann beispielsweise eine Luminiszenzdiode verwendet werden, die beispielsweise als Leuchtdiode bekannt ist. Es sind aber auch andere opto - elektronische Wandler einsetzbar. Die Ankoppelung des Koppelelementes 10 ist am Lichtwellenleiter beliebig durchführbar. Der Lichtwellenleiter 41 muß nicht auseinandergeschnitten werden, wie es bei anderen handelsüblichen Koppelelementen erforderlich ist. Da die Nuttiefe a im Vergleich zum Durchmesser b des Lichtwellenleiters 41 relativ gering ist, ist auch die Dämpfung der Strahlung im Lichtwellenleiter 41 gering.

## Patentansprüche

1. Koppelelement mit einem Lichtwellenleiter, der in Umfangsrichtung eine Nut aufweist, und mit mindestens einem lichtemittierenden Sende- und/oder einem lichtempfindlichen Empfangselement zum Ein- bzw. Auskoppeln der optischen Strahlung in den bzw. aus dem Lichtwellenleiter, dadurch gekennzeichnet, daß das Empfangselement (2) und/oder Sendeelement (3) an einem T-förmigen Träger (1) so angeordnet ist, daß die Senderichtung, bzw. Empfangsrichtung mit der Grundfläche des T-förmigen Trägers (1) einen vorgegebenen Winkel (α) bildet, daß die Mittelstütze des T-förmigen Trägers (1) voraus in die Nut (42) derart eingesetzt ist, daß das Empfangselement (2) und/oder das Sendeelement (3) mit seiner Fläche mindestens teilweise in die Nut (42) so eintaucht, daß aus der Nut (42) ein Teil der optischen Strahlung des Lichtwellenleiters (41) auf das Empfangselement (2) fällt bzw. aus dem Sendeelement (3) in den Lichtwellenleiter eintritt und daß der Teil der optischen Strahlung als elektrisches Signal am Empfangselement (2) abgreifbar bzw. am Sendeelement (3) ein weiterer Teil der optischen Strahlung einspeisbar ist.

2. Koppelelement nach Anspruch 1, dadurch gekennzeichnet, daß die eingebrachte Nut (42) die Form eines Zylindersegments aufweist.

3. Koppelelement nach Anspruch 1, dadurch gekennzeichnet, daß die eingebrachte Nut (42) eine Keilform aufweist.

4. Koppelelement nach einem der vorhergehenden Ansprüche, dadurch gekennzeichnet, daß die Oberflächennormale (10) des Empfangs-/bzw. Sendeelementes (2, 3) mit der Hauptausbreitungsrichtung der optischen Strahlung im Lichtleiter in etwa übereinstimmt.

5. Koppelelement nach einem der vorhergehenden Ansprüche, dadurch gekennzeichnet, daß das Koppelelement (10) mit einer transparenten Vergußmasse (9) am Lichtwellenleiter (41) befestigt ist, die in etwa den gleichen optischen Brechungsindex aufweist wie der Lichtwellenleiter (41).

6. Koppelelement nach einem der vorhergehenden Ansprüche, dadurch gekennzeichnet, daß das Empfangselement (3) eine Fotodiode ist.

7. Koppelelement nach einem der vorhergehenden Ansprüche, dadurch gekennzeichnet, daß das Sendeelement (3) ein IR-Strahler ist.

8. Koppelelement nach einem der vorhergehenden Ansprüche, dadurch gekennzeichnet, daß das Empfangselement (2) und Sendeelement (3) mit einem ersten Anschluß über elektrische Leiter (7) mit auf dem Träger (1) angeordneten Anschlußstiften (8) verbunden ist und daß der zweite Anschluß jedes Elementes auf einen gemeinsamen Anschlußstift (6) geführt ist.

9. Koppelelement nach Anspruch 8, dadurch gekennzeichnet, daß das Empfangselement (2) und Sendeelement (3) mit einem Wärmeleitkleber (4) auf dem Träger (1) befestigt sind.

## Claims

1. Coupling element having an optical waveguide which exhibits a groove in the circumferential direction, and having at least one light-emitting transmitting element and/or a light-sensitive receiving element for coupling in and respectively coupling out the optical radiation into and respectively out of the optical waveguide, characterized in that the receiving element (2) and/or transmitting element (3) is disposed on a T-shaped carrier (1) so that the transmission direction and respectively reception direction form a predetermined angle (α) with the base surface of the T-shaped carrier (1), in that the central support of the T-shaped carrier (1) is inserted in advance into the groove (42) in such a manner that the receiving element (2) and/or the transmitting element (3) extends with its surface at least partially into the groove (42) so that a part of the optical radiation of the optical waveguide (41) falls from the groove (42) onto the receiving element (2) and respectively enters from the transmitting element (3) into the optical waveguide, and in that the part of the optical radiation can be picked off as an electrical signal on the receiving element (2) or respectively a further part of the optical radiation can be injected at the transmitting element (3).

2. Coupling element according to Claim 1, characterized in that the constructed groove (42) exhibits the shape of a segment of a cylinder.

3. Coupling element according to Claim 1, characterized in that the constructed groove (42) exhibits a wedge shape.

4. Coupling element according to one of the preceding claims, characterized in that the normal (10) to the surface of the receiving/and respectively transmitting element (2, 3) corresponds approximately with the principal direction of propagation of the optical radiation in the waveguide.

5. Coupling element according to one of the preceding claims, characterized in that the coupling element (10) is secured by a transparent filler (9) to the optical waveguide (41), which filler exhibits approximately the same optical refractive index as the optical waveguide (41).

6. Coupling element according to one of the preceding claims, characterized in that the receiving element (3) is a photodiode.

7. Coupling element according to one of the preceding claims, characterized in that the transmitting element (3) is an IR radiator.

8. Coupling element according to one of the preceding claims, characterized in that the receiving element (2) and transmitting element (3) are connected by a first connection via electrical conductors (7) to connecting pins (3) disposed on the carrier (1), and in that the second connection of each element is passed to a common connecting pin (6).

9. Coupling element according to Claim 8, characterized in that the receiving element (2) and transmitting element (3) are secured on the carrier (1) by a thermally conductive adhesive (4).

## Revendications

1. Elément de couplage pour un guide d'ondes lumineuses ayant une rainure dans sa direction périphérique et au moins un élément photosensible d'émission et/ou de réception pour injecter ou découpler le rayonnement optique du guide d'ondes lumineuses, élément caractérisé en ce que l'élément de réception (2) et/ou l'élément d'émission (3) est monté sur un support en forme de T, la direction d'émission ou la direction de réception formant avec la surface de base du support (1) en T, un angle (α) prédéterminé, l'appui central du support (1) en forme de T pouvant se placer préalablement dans la rainure (42) pour que l'élément de réception (2) et/ou l'élément d'émission (3) pénètrent par leur surface, au moins partiellement dans la rainure (42) et qu'une partie du rayonnement optique du guide d'ondes lumineuses (41) dans la rainure (42), arrive sur l'élément de réception (2) ou parte de l'élément d'émission (3) pour être injectée dans le guide d'ondes lumineuses et qu'une partie du rayonnement optique soit reçue comme signal électrique sur l'élément de réception (2) ou soit injectée comme autre partie du rayonnement optique par l'élément d'émission (3).

2. Elément de couplage selon la revendication 1, caractérisé en ce que la rainure (42) est réalisée sous la forme d'un segment de cylindre.

3. Elément de couplage selon la revendication 1, caractérisé en ce que la rainure (42) a une forme de coin.

4. Elément de couplage selon l'une des revendications précédentes, caractérisé en ce que la normale à la surface (10) de l'élément de réception/émission (2, 3) correspond sensiblement à la direction principale de déploiement du rayonnement optique dans le guide d'ondes lumineuses.

5. Elément de couplage selon l'une des revendications précédentes, caractérisé en ce que l'élément de couplage (10) est fixé au guide d'ondes lumineuses (41) par une masse coulée (9), transparente, cette masse ayant sensiblement le même indice de réfraction optique que le guide d'ondes lumineuses (41).

6. Elément de couplage selon l'une des revendications précédentes, caractérisé en ce que l'élément de réception (2) est une photodiode.

7. Elément de couplage selon l'une des revendications précédentes, caractérisé en ce que l'élément d'émission (3) est un émetteur de rayonnement infrarouge.

8. Elément de couplage selon l'une des revendications précédentes, caractérisé en ce que l'élément de réception (2) et l'élément d'émission (3) sont reliés à une première borne par un conducteur électrique (7) à des broches de raccordement (8) du support (1) et la seconde borne de chaque élément est reliée à une borne de raccordement (6) commune.

9. Elément de couplage selon la revendication 8, caractérisé en ce que l'élément de réception (2) et l'élément d'émission (3) sont fixés au support (1) avec une colle conductrice de chaleur (4).
